# EUROPÄISCHE PATENTSCHRIFT

(11) **EP 0 846 495 B1**
(45) Veröffentlichungstag und Bekanntmachung des Hinweises auf die Patenterteilung: **24.04.2002**
(21) Anmeldenummer: 97116829.9
(22) Anmeldetag: 27.09.1997
(51) Int. Cl.: B01J 39/22, C08F 251/00, C08F 251/02

(54) **Ionenaustauschermaterial auf polysaccharidbasis und Verfahren zu dessen Herstellung**
Ion exchange material based on polysaccharide and its preparation process
Echangeur d'ions à base de polysaccharide et son procédé de préparation

(30) Priorität: 05.12.1996 DE 19650485
(43) Veröffentlichungstag der Anmeldung: 10.06.1998
(73) Patentinhaber: GSF-Forschungszentrum für Umwelt und Gesundheit GmbH, 85764 Oberschleissheim (DE)
(72) Erfinder: Zhang, Bao Wen, Prof. Dr., Haidain District, 10081 Beijing (CN); Kettrup, Antonius, Prof. Dr., 59821 Arnsberg (DE); Fischer, Klaus, Dr., 85221 Dachau (DE); Bieniek, Dieter, Dr., 85716 Unterschleissheim (DE)

(56) Entgegenhaltungen:
- DE-A- 2 356 532
- US-A- 3 395 070
- US-A- 4 584 103
- FISCHER H J ET AL: "SYNTHESES OF CELLULOSE EXCHANGERS CARRYING CHELATING ANCHOR GROUPS FOR SELECTIVE SEPARATION OF URANYL IONS" ANGEWANDTE MAKROMOLEKULARE CHEMIE, Bd. 208, 1.Mai 1993, Seiten 133-150, XP000372857

## Beschreibung

Die Erfindung betrifft Ionenaustauschermaterial auf Polysaccharidbasis und Verfahren zu dessen Herstellung.

Die bekannten Verfahren zur Darstellung von Cellulose-Ionenaustauschern (CIA) gehen durchweg von der nucleophilen Substitution der Hydroxylgruppen des Cellulose-Makromoleküls aus. S. L. Snyder und T.L. Vigo beschrieben in Environmental Science & Technology 8, 944 (1975) die Darstellung von N-(2-Aminoethyl)aminodeoxycellulose (AEAC) aus Baumwolle, Phosphoroxychlorid und Ethylendiamin. Ein chelatbildender Cellulosefilter mit 2,2'-Diaminodiethylamin als funktionelle Gruppe wurde von J. Smits und R. V. Grieken, Die Angewandte Makromolekulare Chemie 72, 105 (1978), synthetisiert. K. H. Lieser und P. Burba berichteten in einem Patent, DE 24 37 594.8 über eine Reihe von Cellulose-Ionenaustauschern (CIA) mit Komplexeigenschaften. Die Variante des Verfahrens besteht darin, Cellulose mit p-Aminophenyl-Verbindung p-H₂HN-C₆H₄-SO₂-OSO₃Na umzusetzen, das Drivat p-H₂N-C₆H₄-SO₂-CH₂-O-Cell (cell. = Cellulose) zu diazotieren und mit kupplungsfähigen Liganden R zu verknüpfen. Die Kapazität betrug etwa 0,3 - 0,7 mÄq/g. M. Tokuhisa und O. Noboru, Seni. Gakkaishi. 36, 353 (1980), haben eine Reihe faseriger Kationenaustauscher und Anionenaustauscher dargestellt, wobei Cellulosefaser als Verstärkungsmittel dient. Durch Polykondensation wurden eine Ionenaustauscherfaser von K. Dimov und M. Bandova, Khim. Ind. (Sofia) (2), 63 (1980), hergestellt. V. Grdinic und N. Kjundzic CCACAA 54, 109 (1981) beschrieben die Darstellung einer Cellulosefaser mit Hydroxamsäure-Gruppen, die die Kapazität von 2,1 mÄq/g hat.
Ein Cellulose-Propfcopolymeres mit Eigenschaften eines polymeren Komplexions wurde von V. N. Tolmachev, W. V. Drobnitskaya und L. S. Galbraich, Izv. Vuzov. Khim Teknol (2), 198 (1975) beim Behandeln des Cellulose-Polyacrylnitril-Pfopfcopolymeren mit Hydroxylamin bei 100° C erhalten. Unter diesen Bedingungen werden die Nitril-Gruppen in Amindoxim- und Hydroxamsäure Gruppen umgewandelt. Z. A. Rogowin und L. S. Galbraich, beschrieben, "Die chemische Behandlung und Modifizierung der Cellulose", Georg Thieme Verlag, S. 55 (1983), die Herstellung von Ionenaustauschern durch Pfropfcopolymerisation aus Cellulose und Acryl- bzw. Methylacrylsäure. Auf diesem Weg können bis zu 25 % Carboxy-Gruppen eingeführt und so Cellulose-Ionenaustauscher mit hoher Austauschkapazität erhalten werden. H. J. Fischer und K. H. Lieser, Fresenius J. Anal. Chem. 34.6, 934 (1993), beschrieben, die Darstellungsverfahren von einer neuen Reihe CIA mit makrocyclischen chelatbildenden Gruppen. Sie haben die Kapazität von etwa 0,28 - 0,65 mmol/g für UO²⁺.
Aus Fischer H J et al.: Synthesais of cellulose exchangers carrying chelating anchor groups for selective separation of uranyl ions Angewandte Makromolekulare Chemie, Bd. 208, 1. Mai 1993, Seiten 133-150, XP000372857 ist ein Ionenaustauscher auf Cellulosebasis bekannt, die entweder Carboxy- oder Amidoximgruppen enthalten.
Aufgabe der Erfindung ist es, ein Ionenaustauschermaterial, welches selektiv auf bestimmte anorganische Ionen wirkt bereitzustellen und ein Verfahren zu dessen Herstellunganzugeben.

Gelöst wird diese Aufgabe durch die Merkmale der Patentansprüche 1 und 3. Die Unteransprüche beschreiben vorteilhafte Ausgestaltungen der Erfindung.

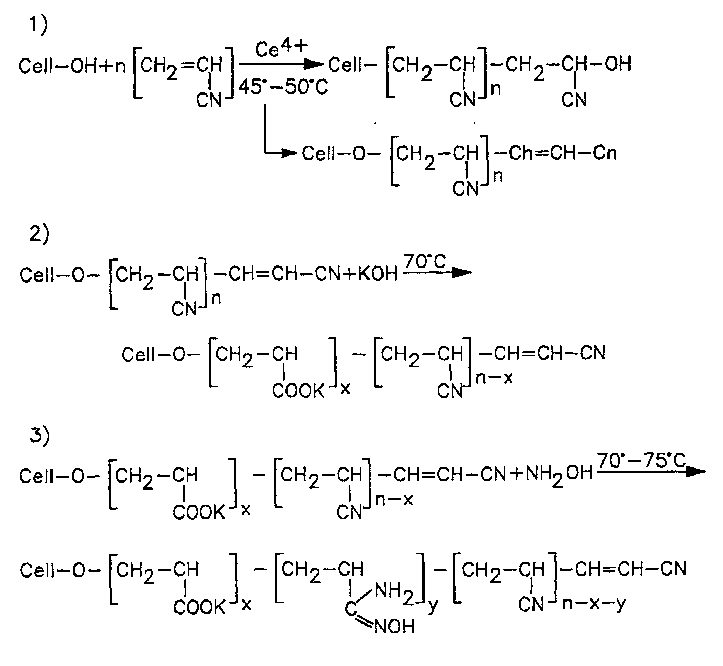

Die Erfindung wird im folgenden anhand eines Ausführungsbeispiels mit Hilfe der Figur näher erläutert.

Dabei zeigt die Figur die drei Gleichungen die den drei Reaktionsschritten beim Verfahren zur Herstellung des Ionenaustauschers entsprechen.

Das Salz des vierwertigen Cers dient als Initiator. Die Ce(IV)-Salze können die Polymerisation von Acrylnitrilmonomeren beim Fehlen eines Reduktionsmittels initieren. Wenn die Synthese des Cellulose Pfropfencopolymeren unter Bedingungen durchgeführt wird, bei denen die Dauer des Copolymerisationsprozesses kürzer ist als die Induktionszeit der Homopolymerisation (z. B. unter Argon oder Stickstoff), gelingt es, Cellulose-Pfropfencopolymere herzustellen, die praktisch kein Homopolymeres enthalten. Bei Verwendung Cerammoniumnitrat anstelle von Cerammoniumsulfat wird die Geschwindigkeit der Pfropfpolymerisation zwei bis dreimal größer.

Die Synthese des faserigen Cellulose-Ionenaustauschers (FCIA) mit Carboxy- und Amidoxim-Gruppen gliedert sich in drei Teile:
1. Ce(IV)-initierte Pfropfcopolymerisation von Acrylnitrilmonomeren auf vernetzte Cellulosefaser.
2. Einführung der Carboxy-Gruppen durch die Verseifung des Pfropfcopolymeren von Cellulosefaser mit Polyacrylnitril.
3. Modifizierung der verseiften Pfropfcopolymeren der Cellulosefaser mit Polyacrylnitril.

### Zu 1.

Nach J. D. Guthrie und A. L. Bullock, Industrial and Engineering Chemistry, 52, 935 (1960), wurden in einem weiteren Schritt 20,0 g Cellulosefaser mit 600 ml Formaldehydlösung (36 % Formaldehyd, 37 % Salzsäure = 10 : 2; V/V) bei Raumtemperatur sechs Stunden umgesetzt. Nach Filtration wurde die vernetzte Cellulosefaser mit Wasser, Natriumcarbonatlösung (0,2 %) und wieder mit Wasser gewaschen. Im letzten Schritt wurde die vernetzte Cellulosefaser mit Ethanol (99,9 %) gewaschen und bei Raumtemperatur getrocknet.

15 g getrocknete vernetzte Cellulosefaser wurde im Acrylnitril/Wassergemisch (65/650 ml) suspendiert, das schon mit Stickstoff gesättigt war. Die Suspension wurde auf 40 ° C erhitzt. Danach wurde zweimal je 10 ml 0,1 M Cerammoniumnitrat (in 1 N HNO₃) tropfenweise innerhalb von zwei Stunden lang unter Rühren und unter Stickstoffatmosphäre in die Suspension hinzugefügt. Nach einer Initiierungszeit von 20 bis 30 Minuten wurde die Temperatur der Suspension auf 50 - 60 ° C erhöht. Die Pfropfenpolymerisation wurde vier Stunden lang bei 40 - 45° C fortgesetzt. Zur Entfernung nicht umgesetzten Acrylnitrils und von Homopolymeren wurde das Produkt mit heißem Wasser und danach mit Aceton extrahiert und zuletzt bei Raumtemperatur getrocknet. Die Ausbeute betrug 35,7 bis 39,2 g. Der Pfropfwirkungsgrad betrug 138 % bis 161,4 % (N % = 12,1 % - 12,8 %).

### Zu 2):

20 g Pfropfcopolmer aus Cellulosefaser mit Polyacrylnitril wurden in 1000 ml wäßriger Kaliumhydroxid-Lösung, hergestellt aus 30 g Kaliumhydroxid und 1000 ml Wasser, 70 min. bei 70 - 72° C verseift. Nach Filtration und Auswaschen mit Wasser, Salzsäure (1 N) und Ethanol wurde das Endprodukt bei Raumtemperatur getrocknet (N % = 11,3 %).

### Zu 3) :

40 g verseiftes Pfropfcopolymer aus Cellulosefaser mit Polyacrylnitril wurden in 500 ml ethanolischer Hydroxylamin-Lösung, hergestellt aus 50 g Hydroxylammoniumchlorid, 32 g Kaliumhydroxid und 500 ml Ethanol, 20 Stunden bei 65 - 70° C und pH 6,2 - 6,7 modifiziert.

Nach Filtration und Auswaschen mit Ethanol, Salzsäure (0,5 N), Wasser und zuletzt wieder mit Ethanol, wurde das Endprodukt an der Luft getrocknet.

Der Faseraustauscher wies einen Stickstoffgehalt von 15,3 % auf. Aus der Differenz des N-Gehalts wurde eine Kapazität von 2,86 mmol/g für Amidoxim-Gruppen und von 0,7 mmol/g für die Carboxy-Gruppen bestimmt. Ferner wurden die Verteilungskoeffiziente Kd einer größeren Reihe anorganischer Ionen bestimmt.

Neben langen Cellulosefasern wurden als Austauschermatrix auch kurze Cellulosefasern und Cellulosepulver (Chemische Werke Zell-Wildhausen GmbH) eingesetzt. CIA auf dieser Basis wiesen geringere Kapazitäten aber größere Verteilungskoeffizienten auf.

Die oben dargestellte Ionenaustauscher aus Cellulosefaser hat die Formel

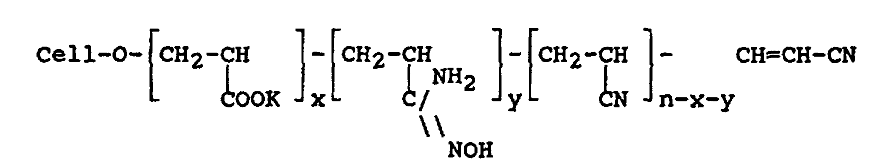

Dabei bedeutet, wie in der Figur n ≥ 2, x ≥ 1 und y ≥ 1.

Die Carboxy- und Amidoxim Gruppen können mit Metallionen Chelatkomplexe bilden. Diese funktionellen Gruppen zeichnen sich jeweils durch hohe Verteilungskoeffizienten für bestimmte Ionen aus, d. h. sie sind in der Lage, diese Metallionen mit hoher Selektivität zu binden. Deshalb wurde ein Verfahren zur Abtrennung von Spurenschwermetallen aus Wasser oder Abwasser entwickelt. Ein geeignetes Verfahren hierfür besteht darin, daß man die zu untersuchende Lösung über eine Trennsäule gibt, die den beschriebenen Ionenaustauscher auf Cellulosefaser enthält. Ein besonderer Vorteil ist darin zu sehen, daß es sich zu quantitativen Bestimmung von Spurenschwermetallen im Wasser oder im Abwasser verwenden läßt, indem man die Lösung durch einen Ionenaustauscher-Säule laufen läßt und die Konzentration der interessierenden Ionen im Eluat bestimmt.

Die Tabelle 1 zeigt die Kapazität des faserigen Celluloseionenaustauschers für Schwermetalle.

**Tabelle 1:**

| | Cu²⁺ | Co²⁺ | Ni²⁺ | Cr²⁺ | Cd²⁺ | Zn²⁺ | Pb²⁺ | Hg²⁺ | Mn²⁺ |
|---|---|---|---|---|---|---|---|---|---|
| pH | 4,5 | 7,0 | 7,0 | 4,0 | 7,0 | 7,0 | 5,0 | 1,5 | 7,0 |
| Kapazität mmol/g | 1,05 | 0,46 | 0,55 | 0,74 | 0,81 | 0,52 | 1,46 | 0,67 | 0,37 |

Die Wirksamkeit des erfindungsgemäßen Ionenaustauschermaterials wird nun an zwei Beispielen aufgezeigt.

500 ml künstlich hergestellte wäßrige Lösung enthielt insgesamt 25 µg für Cu²⁺, Co²⁺, Cd²⁺, Ni²⁺, Zn²⁺ und Pb²⁺, der pH-Wert betrug 5,0. 500 ml Lösung wurde mit einer Durchlaufgeschwindigkeit von 2 ml/min durch eine Trennsäule geschickt, die 0,6 g faserige Celluloseaustauscher enthielt (Säulendurchmesser 1,2 cm, Füllhöhe 6,5 cm). Zur Bestimmung des bei der Trennung erreichten Faktors wurde mit einem ICP-Spektrometer die Konzentration der Elemente im Eluat bestimmt. Die absorbierten Elemente wurden mit 5 ml/HNO₃ konz./Wasser (1:1) und dann mit 5 ml/HCl 32 %/Wasser (2:1) eluiert.

**Tabelle 2:**

| Abtrennung und Wiedergewinnung der Ionen Pb²⁺, Cu²⁺, Co²⁺, Ni²⁺, Zn²⁺ und Cd²⁺ 25 µg/500 ml für jedes Element (0,05 µg/ml) | | | | | | |
|---|---|---|---|---|---|---|
| | Pd²⁺ | Cu²⁺ | Co²⁺ | Ni²⁺ | Zn²⁺ | Cd²⁺ |
| 1 | 106% | 90,6% | 94,7% | 92,6% | 96,5% | 96,3% |
| 2 | 99,8% | 95,0% | 99,8% | 93,6% | 94,1% | 99,4% |
| 3 | 91,8% | 91,4% | 91,9% | 96,0% | 94,1% | 94,8% |
| 4 | 91,7% | 94,2% | 94,4% | 94,6% | -- | 95,9% |
| 5 | 98,0% | 94,3% | 94,0% | 91,8% | 95,7% | 96,0% |
| 6 | 98,0% | 98,0% | 95,6% | 95,7% | 100,5% | 94,4 % |
| 7 | 95,0% | 92,8% | 91,8% | 91,8% | 97,0% | 89,9% |
| 8 | 96,0% | 99,9% | 95,2% | 94,4% | 96,9% | 92,6% |
| 9 | 92,7% | 93,0% | 92,0% | 92,7% | 90,7% | 90,1% |

500 ml künstlich hergestelltes Abwasser enthielt jeweils 5 mg der Elemente Cu²⁺, Cd²⁺, Cr²⁺, Ni²⁺ und 10 mg Pb²⁺ und Hg²⁺. Der pH-Wert betrug 6,0. Unter starkem Rühren wurden 3,0 g faseriger Celluloseaustauscher ins Abwasser hinzugefügt. Nach 60 Minuten wurde das Abwasser filtriert und die Restkonzentration der Schwermetallionen im Filtrat wurde mit einem ICP-Spektrometer analysiert. Die Restkonzentration der Schwermetallionen sind in Tabelle 3 angegeben.

**Tabelle 3:**

| Entfernung von Schwermetallionen aus Abwasser (Volumen: 500 ml; pH 6,0; faseriger Celluloseaustauscher: 3,0 g) | | | | | | |
|---|---|---|---|---|---|---|
| | Cd²⁺ | Cr²⁺ | Cu²⁺ | Ni²⁺ | Pb²⁺ | Hg²⁺ |
| Ursprungskonzentration (mg/l) | 10 | 10 | 10 | 10 | 20 | 20 |
| Restkonzentration (mg/l) | 0,066 | 0,047 | 0,053 | 0,29 | 0,15 | 0,122 |
| Entfernungsleistungsfähigkeit | 99,3% | 99,5% | 99,5% | 97,1% | 98,5% | 98,8% |

## Patentansprüche

1. Ionenaustauschermaterial auf Polysaccharidbasis, bei welchem der Wasserstoff reaktionsfähiger Hydroxylgruppen des Polysaccharids ersetzt ist durch eine Kohlenwasserstoffkette, welche funktionelle Carboxy- oder Amidoxim-Gruppen enthält, wobei die Gesamtzahl von Amidoxim- und Carboxygruppen in der gleichen Größenordnung liegen.

2. Ionenaustauschermaterial nach Anspruch, **dadurch gekennzeichnet, daß** das Polysaccharid faserige Cellulose ist.

3. Verfahren zur Herstellung von Ionenaustauschermaterial auf Polysaccharidbasis **gekennzeichnet durch** folgende Verfahrensschritte:
a) Propfcopolymerisieren von Acrylnitrilmonomeren auf vernetzte Cellulosefaser wobei die Reaktion mit vierwertigem Cer initiiert wird,
b) Einführung der Carboxy-Gruppen **durch** Verseifung des Pfropfkopolymeren mit Polyacrylnitril und
c) Erzeugen von Amidoxim- Gruppen **durch** Umsetzen mit Hydroxylamin.

4. Verfahren nach Anspruch 3, **dadurch gekennzeichnet, daß** als Polysaccharid faserige Cellulose verwendet wird.

5. Verfahren nach Anspruch 3 oder 4, **dadurch gekennzeichnet, daß** als vierwertiges Cer, Cerammoniumnitrat verwendet wird.

## Claims

1. Ion exchanger material based on polysaccharide, wherein the hydrogen of reactive hydroxyl groups of the polysaccharide is replaced by a chain of hydrocarbons which contains functional carboxy or amidoxim groups, the total number of amidoxim and carboxy groups being of the same order of magnitude.

2. Ion exchanger material according to claim 1, **characterised in that** the polysaccharide is fibrous cellulose.

3. Method of producing ion exchanger material based on polysaccharide, **characterised by** the following method steps:
a) graft-copolymerising acrylonitrile monomers onto cross-linked cellulose fibre, the reaction being initiated with tetravalent cerium,
b) introducing the carboxy groups by saponifying the graft-copolymers with polyacrylonitrile, and
c) producing amidoxim groups by reacting with hydroxyl amine.

4. Method according to claim 3, **characterised in that** fibrous cellulose is used as the polysaccharide.

5. Method according to claim 3 or 4, **characterised in that** cerium ammonium nitrate is used as the tetravalent cerium.

## Revendications

1. Matériau échangeur d'ions à base de polysaccharides, dans lequel l'hydrogène des groupes hydroxyles réactifs du polysaccharide est remplacé par une chaîne hydrocarbonée qui contient des groupes carboxy ou amidoxime, le nombre total de groupes amidoxime et carboxy se situant dans le même ordre de grandeur.

2. Matériau échangeur d'ions selon la revendication 1,
**caractérisé en ce que**
le polysaccharide est une cellulose fibreuse.

3. Procédé de production d'un matériau échangeur d'ions à base de polysaccharides,
**caractérisé par** les étapes opératoires suivantes:
a) copolymérisation et greffage de monomères d'acrylonitrile sur des fibres cellulosiques ré-ticulées, la réaction étant amorcée avec du cérium tétravalent ;
b) introduction des groupes carboxy par saponification du copolymère greffé avec du polyacrylonitrile et
c) production de groupes amidoxime par réaction avec l'hydroxylamine.

4. Procédé selon la revendication 3,
**caractérisé en ce qu'**
on utilise comme polysaccharide la cellulose fibreuse.

5. Procédé selon la revendication 3 ou 4,
**caractérisé en ce qu'**
on utilise comme cérium tétravalent le nitrate de cérammonium.
